# DEMANDE DE BREVET EUROPEEN

(11) **EP 1 818 377 A1**
(43) Date de publication de la demande: **15.08.2007**
(21) Numéro de dépôt: 07300777.5
(22) Date de dépôt: 07.02.2007
(51) Int. Cl.: C09D 123/08, C09D 175/06, H01B 7/00

(54) **Composition de matériau de gaine pour càble d'énergie et/ou de télécommunication**

(30) Priorité: 13.02.2006 FR 0650499
(71) Demandeur: Nexans, 75008 Paris (FR)
(72) Inventeur: Kensicher, Christèle, 69007, LYON (FR); Alcaraz, Valéry, 69190, SAINT-FONS (FR)
(74) Mandataire: Feray, Valérie

(57) **Abrégé**

La présente invention concerne une composition réticulable pour matériau de gaine d'un câble d'énergie et/ou de télécommunication.

L'invention est remarquable en ce que la composition réticulable comporte un copolymère d'éthylène et d'acétate de vinyle, un composé synthétique choisi parmi le groupe des acrylonitriles et des élastomères polyuréthanes, un peroxyde, ainsi qu'un aminosilane.

## Description

La présente invention concerne une composition réticulable qui est destinée à la préparation d'un matériau de gaine.

L'invention trouve une application particulièrement avantageuse, mais non exclusive, dans le domaine des câbles d'énergie et/ou de télécommunication.

On sait que la gaine la plus externe d'un câble joue un rôle primordial en terme de protection, que ce soit d'un point de vue mécanique, thermique ou chimique.

Dans les applications de type offshore, les gaines externes se doivent notamment de résister aux huiles et aux boues de pétrole. Pour ce faire, elles sont généralement réalisées en caoutchouc synthétique vulcanisé.

Aujourd'hui, pour préparer de tels matériaux, on utilise habituellement des mélanges d'élastomères que l'on réticule classiquement sous pression et température dans des tubes vapeurs, en présence de soufre ou de peroxyde.

Ce type de procédé de fabrication présente toutefois l'inconvénient d'être compliqué et onéreux à mettre en oeuvre.

La réticulation en tube vapeur requiert en effet l'utilisation d'équipements relativement complexes et gros consommateurs d'énergie, puisque des pressions et des températures élevées sont mises en jeu. Il en résulte qu'au final, le matériel s'avère extrêmement cher aussi bien à l'achat, qu'à l'entretien ou à l'utilisation.

La réticulation en tube vapeur implique par ailleurs le respect de normes de sécurité qui sont particulièrement contraignantes.

Aussi le problème technique à résoudre, par l'objet de la présente invention, est de proposer une composition réticulable pour matériau de gaine d'un câble d'énergie et/ou de télécommunication, composition réticulable qui permettrait d'éviter les problèmes de l'état de la technique en garantissant l'obtention d'un matériau de gaine sensiblement moins onéreux à fabriquer, mais disposant toujours de réelles capacités de résistance aux huiles et aux boues de pétrole.

La solution au problème technique posé consiste, selon la présente invention, en ce que la composition réticulable comporte un copolymère d'éthylène et d'acétate de vinyle, un composé synthétique choisi parmi le groupe des acrylonitriles et des élastomères polyuréthanes, un peroxyde, ainsi qu'un aminosilane.

L'invention telle qu'ainsi définie présente l'avantage de conduire à l'obtention d'un thermoplastique élastomère tout à fait spécifique, en ce sens qu'il est à même de réticuler à l'air ambiant en une quinzaine de jours. On peut d'ailleurs ici véritablement parler d'auto-réticulation.

Or un thermoplastique élastomère constitue un matériau extrêmement souple qui, une fois réticulé, est par ailleurs parfaitement en mesure de résister aux huiles et aux boues de pétrole. Il s'avère par conséquent complètement adapté pour réaliser des gaines de câbles destinés à être employés dans des applications offshore.

L'auto-réticulation permet en outre d'éviter la mise en oeuvre des onéreux procédés de réticulation en tubes vapeurs, ce qui génère par conséquent une économie substantielle en terme de coût de fabrication. La préparation d'un matériau de gaine conforme à l'invention peut ainsi avantageusement s'effectuer en utilisant simplement les équipements de production classiques des matériaux thermoplastiques, ce qui concoure à son tour à abaisser encore davantage le prix de revient dudit matériau. Cette facilité de fabrication se traduit aussi par un gain significatif en terme de flexibilité au niveau industriel.

Il est entendu que si la réticulation d'une composition conforme à l'invention peut s'opérer à l'air ambiant en moins de trois semaines, il est également possible d'accélérer les choses en augmentant la température, par exemple en plaçant le thermoplastique élastomère dans une étuve à 85°C pendant 12 heures.

De manière particulièrement avantageuse, on peut préciser que le rôle du peroxyde, d'un point de vue chimique, est schématiquement de permettre l'association entre le copolymère d'éthylène et d'acétate de vinyle d'une part, et le composé synthétique d'autre part, dans le but de pouvoir disposer d'un mélange homogène.

Il permet ainsi de lier chimiquement, par une liaison carbone-carbone, le copolymère d'éthylène et d'acétate de vinyle avec le composé synthétique.

L'aminosilane a quant à lui pour fonction de générer l'auto-réticulation.

De manière particulièrement avantageuse, la composition réticulable est dotée de 20 à 90 parties en poids de copolymère d'éthylène et d'acétate de vinyle pour 100 parties en poids de résine. Il est entendu que dans l'ensemble de ce texte, et de manière tout à fait classique, le terme résine désigne globalement l'ensemble des polymères présents dans la composition.

De préférence, le copolymère d'éthylène et d'acétate de vinyle contient entre 28 et 80% d'acétate de vinyle.

Conformément à une autre caractéristique avantageuse de l'invention, la composition réticulable est pourvue de moins de 40 parties en poids de composé synthétique pour 100 parties en poids de résine.

Lorsque le composé synthétique est un élastomère polyuréthane, ce dernier est de préférence de type polyester. Ceci étant dit, un élastomère polyuréthane de type polyéther demeure parfaitement utilisable.

De manière particulièrement avantageuse, la composition réticulable dispose entre 0,8 et 2,1 parties en poids de peroxyde pour 100 parties en poids de résine.

De préférence, le peroxyde présente une température de décomposition comprise entre 110 et 145°C, et de préférence entre 135 et 145°C.

Ces températures de décomposition correspondent aux températures mesurées durant la mise en oeuvre, ou « compoundage », de la composition selon la présente invention, par exemple dans un mélangeur interne.

Conformément à une autre caractéristique avantageuse de l'invention, la composition réticulable comporte entre 1 et 4 parties en poids d'aminosilane pour 100 parties en poids de résine.

Selon une particularité de l'invention, la composition réticulable peut en outre être dotée d'au moins un polymère secondaire compatible avec le copolymère d'éthylène et d'acétate de vinyle.

Cela signifie que le polymère de base du matériau de gaine peut être en fait constitué par un mélange de polymères dont la résine principale demeure le copolymère d'éthylène et d'acétate de vinyle. Cette caractéristique permet de conférer des propriétés mécaniques particulières au matériau de gaine, et/ou d'ajuster leurs niveaux.

De préférence, le polymère secondaire est choisi parmi le groupe des polyéthylènes hautes densités et des polyéthylènes greffés anhydride maléique.

De manière particulièrement avantageuse, la composition réticulable dispose de moins de 40 parties en poids de polymère secondaire pour 100 parties en poids de résine.

Selon une autre particularité de l'invention, la composition réticulable peut en outre être pourvue d'au moins une charge choisie parmi le groupe des charges ignifugeantes, des charges de remplissage, et des charges de renforcement.

Dans ce cas de figure, la composition réticulable comportera de préférence moins de 190 parties en poids de charge pour 100 parties en poids de résine.

Selon une autre particularité de l'invention, la composition réticulable peut en outre être dotée d'au moins un additif choisi parmi le groupe des stabilisants, des antioxydants, des agents de coloration, des agents de mise en oeuvre, et des anti-ultraviolets.

Bien entendu, l'invention concerne par ailleurs tout câble d'énergie et/ou de télécommunication comportant au moins une gaine obtenue à partir d'une composition réticulable telle que précédemment décrite. Il est à noter que dans ce genre de configuration, il peut s'agir indifféremment d'une gaine interne ou d'une gaine externe.

Mais l'invention est également relative à tout câble d'énergie et/ou de télécommunication, comportant plusieurs conducteurs isolés s'étendant à l'intérieur d'une même gaine de protection externe, et dans lequel ladite gaine de protection externe est obtenue à partir d'une composition réticulable telle que précédemment décrite.

D'autres caractéristiques et avantages de la présente invention apparaîtront au cours de la description de l'exemple comparatif qui va suivre, ledit exemple étant donné à titre illustratif et nullement limitatif.

### Exemple comparatif

L'objectif est de déterminer puis de comparer la résistance aux huiles et aux boues de pétrole de deux matériaux issus de compositions conformes à l'invention, par rapport à celle d'un thermoplastique élastomère équivalent mais non réticulé. Ces trois matériaux sont susceptibles d'être utilisés pour la fabrication de gaines de câbles d'énergie et/ou de télécommunication.

### Compositions des échantillons

La composition de l'échantillon 1 correspondant à celle d'un classique thermoplastique élastomère de l'état de la technique. Les compositions des échantillons 2 et 3 sont quant à elle conformes à l'invention en ce sens qu'elles sont à même de conduire à l'obtention de thermoplastiques élastomères réticulés. Elles se distinguent l'une de l'autre essentiellement par le fait que le composé synthétique est un acrylonitrile dans le cas de l'échantillon 2, alors qu'il est constitué par un élastomère polyuréthane dans le cas de l'échantillon 3.

Le tableau 1 détaille précisément les compositions respectives de ces trois échantillons de matériaux 1, 2 et 3. A cet égard, il est à noter que les quantités mentionnées sont classiquement exprimées en pcr, c'est-à-dire en parties en poids pour cent parties en poids de résine.

**Tableau 1**

| Echantillons | 1 | 2 | 3 |
|---|---|---|---|
| EVA 70 (pcr) | 75 | 60 | 50 |
| EVA 28 (pcr) | 25 | - | - |
| PE haute densité greffé (pcr) | - | 20 | - |
| PE greffé (pcr) | - | - | 20 |
| Polyuréthane (pcr) | - | - | 30 |
| Nitrile (pcr) | - | 20 | - |
| Peroxyde (pcr) | 0, 8 | 1, 6 | 1, 6 |
| Aminosilane (pcr) | 1 | 3, 1 | 3, 1 |
| Charge ignifugeante (pcr) | 150 | 150 | 150 |
| Antioxydant (pcr) | 0,5 | 0,5 | 0,5 |
| Agent de mise en oeuvre (pcr) | 2 | 2 | 2 |

La référence "EVA 70" désigne un copolymère d'éthylène et d'acétate de vinyle comportant 70% d'acétate de vinyle. Il s'agit en l'occurrence d'un produit commercialisé sous la dénomination Levapren 700 par la société Bayer.

La mention "EVA 28" correspond également à un copolymère d'éthylène et d'acétate de vinyle, mais avec cette fois un taux d'acétate de vinyle de 28% seulement. Il s'agit ici d'un produit distribué sous la marque Escorene 328 par la société Exxon.

Le "PE haute densité greffé" est concrètement constitué par un polyéthylène haute densité et greffé anhydride maléique, produit commercialisé sous la dénomination Bynel 40E529 par la société DuPont.

Le "PE greffé" concerne un polyéthylène greffé anhydride maléique, distribué sous la marque Orévac 18302 par la société Arkéma.

La référence "Polyuréthane" désigne un élastomère polyuréthane commercialisé sous la dénomination Urépan 641 G par la société Rhein Chemie.

La mention "Nitrile" concerne quant à elle un acrylonitrile distribué par la société Zéon.

Le terme "Peroxyde" correspond concrètement à du 2,5diméthyl.2,5di(tert-butylperoxy)hexyne 3, produit commercialisé sous la dénomination Trigonox 145.45 par la société Akzo.

La référence "Aminosilane" désigne un gamma-aminopropyltriethoxysilane fourni par la société Degussa.

La "Charge ignifugeante" est constituée d'hydroxyde de magnésium Mg(OH)2, poudre distribuée sous la marque Magnifin H10 par la société Albermarle.

La référence "Antioxydant" correspond à un produit commercialisé sous la dénomination OA par la société Ciba.

La locution "Agent de mise en oeuvre" concerne un produit distribué sous la marque Strucktol WS180 par la société Strucktol.

### Préparation des échantillons

Concrètement, la préparation de chaque composition s'effectue en introduisant ses différents constituants dans un mélangeur interne, suivant un ordre bien précis.

L'opération débute donc par l'introduction simultanée de tous les composés polymères et du peroxyde. Sont concernés ici selon le cas en plus du peroxyde, les deux copolymères d'éthylène et d'acétate de vinyle, à savoir l'EVA 70 et l'EVA 28 ; les deux composés synthétiques, c'est-à-dire l'acrylonitrile et l'élastomère polyuréthane ; les deux polymères secondaires que forment le polyéthylène haute densité greffé anhydride maléique et le polyéthylène greffé anhydride maléique.

Ce n'est qu'une fois le peroxyde complètement décomposé, que l'antioxydant peut être ajouté au mélange. Il est en effet important d'éviter que l'antioxydant en question ne consomme les radicaux libres générés par le peroxyde, et ainsi de garantir l'association entre le composé synthétique et chaque copolymère d'éthylène et d'acétate de vinyle présent.

La charge ignifugeante et le reste des additifs peuvent quant à eux être incorporés à tout moment durant cette étape de mélange. De préférence, l'agent de mise en oeuvre sera ajouté juste avant la fin de la phase de mélange.

La matière obtenue au final est alors refroidie et mise en forme de granules, afin de pouvoir être extrudée à tout moment ultérieur.

Dans un second temps, les granules sont donc introduits dans une extrudeuse, et l'aminosilane est ajouté seulement au moment de l'extrusion proprement dite. Il est à noter que même si l'aminosilane peut être introduit en phase liquide par injection, on préfère ici l'incorporer sous une forme imprégnée, en l'occurrence sur un support poreux en polyéthylène haute densité.

La matière extrudée suivant un profil donné est ensuite placée pendant 12 heures dans une étuve maintenue à 85°C, ceci afin d'accélérer la réticulation.

Après refroidissement, des éprouvettes H2 sont découpées dans les différents profils extrudés, de manière à obtenir les trois types d'échantillons de matériaux de gaines 1, 2 et 3.

### Résistance aux huiles et aux boues de pétrole

De manière à pouvoir déterminer puis comparer les tenues chimiques des différents échantillons, on fait passer à chacun d'entre eux trois types de tests normalisés relatifs à la résistance aux huiles et aux boues de pétrole.

Pour chaque échantillon, le mode opératoire est schématiquement le suivant:

Au préalable, on effectue de classiques essais de traction afin de mesurer la résistance à la rupture ainsi que l'allongement à la rupture de l'échantillon, et ainsi de pouvoir disposer de valeurs de référence. Ces essais de traction étant parfaitement connus de l'homme de métier, ils ne seront pas décrits davantage ici.

On fait ensuite subir à l'échantillon trois types de tests de résistance de manière séparée, c'est-à-dire sur des éprouvettes H2 à chaque fois distinctes. Ces tests sont décrits dans la norme NEK606.

Le premier test de résistance consiste à tremper des éprouvettes dans un bain d'huile IRM902 pendant 24 heures à 100°C.

Le second est sensiblement similaire, à la différence près que l'immersion des éprouvettes dans le bain d'huile IRM902 à 100°C dure dans le cas présent 70 heures.

Le troisième test de résistance concerne quant à lui une trempe dans un bain de Carbosea pendant 56 jours à 70°C.

A la fin de chaque type de test, des essais de traction sont à nouveau réalisés sur les éprouvettes correspondantes, afin de mesurer les gains ou les pertes de résistance à la rupture et d'allongement à la rupture de l'échantillon.

Le tableau 2 regroupe l'ensemble des résultats pour les trois types d'échantillons. A cet égard, il est à noter que la mention "NM" signifie que les grandeurs physiques correspondantes sont non mesurables dans la pratique.

**Tableau 2**

| | Echantillons | 1 | 2 | 3 |
|---|---|---|---|---|
| Avant test | résistance à la rupture (MPa) | 8 | 8 | 9 |
| | Allongement à la rupture (%) | 188 | 160 | 150 |
| Test 1 | Différence de résistance à la rupture (%) | -35 | -4 | -10 |
| | Différence d'allongement à la rupture (%) | 34 | -12 | 8 |
| Test 2 | Différence de résistance à la rupture (%) | -42 | -11 | -21 |
| | Différence d'allongement à la rupture (%) | -40 | -26 | -2 |
| Test 3 | Différence de résistance à la rupture (%) | NM | -25 | 3 |
| | Différence d'allongement à la rupture (%) | NM | -20 | -11 |

A la lecture des résultats avant test, on note tout d'abord que les valeurs d'allongements à la rupture des échantillons 2 et 3 sont notablement inférieures à celle de l'échantillon 1. Cela confirme qu'un matériau de gaine issu d'une composition conforme à l'invention présente intrinsèquement de meilleures propriétés mécaniques qu'un matériau sensiblement de même nature, mais non réticulé, de l'état de la technique.

Si l'on considère maintenant les résultats après application des différents tests de tenue chimique, on remarque naturellement une dégradation des propriétés mécaniques pour les trois types de matériaux. Cependant, cette dégradation est significativement moins importante dans le cas des échantillons 2 et 3, comparé à ce qui est mesuré dans le cas de l'échantillon 1. On observe en effet des pertes de résistance à la rupture et d'allongement à la rupture beaucoup moins importantes, et même parfois des gains. On voit également que l'échantillon 1 n'arrive pas à passer avec succès le troisième test. Quoi qu'il en soit, cela signifie qu'un matériau de gaine issu d'une composition conforme à l'invention offre une bonne résistance aux huiles et aux boues de pétrole.

## Revendications

1. Composition réticulable pour matériau de gaine d'un câble d'énergie et/ou de télécommunication, **caractérisée en ce qu'**elle comporte un copolymère d'éthylène et d'acétate de vinyle, un composé synthétique choisi parmi le groupe des acrylonitriles et des élastomères polyuréthanes, un peroxyde, ainsi qu'un aminosilane.

2. Composition réticulable selon la revendication 1, **caractérisée en ce qu'**elle comporte entre 20 et 90 parties en poids de copolymère d'éthylène et d'acétate de vinyle pour 100 parties en poids de résine.

3. Composition réticulable selon l'une des revendications 1 ou 2, **caractérisée en ce que** le copolymère d'éthylène et d'acétate de vinyle contient entre 28 et 80% d'acétate de vinyle.

4. Composition réticulable selon l'une quelconque des revendications 1 à 3, **caractérisée en ce qu'**elle comporte moins de 40 parties en poids de composé synthétique pour 100 parties en poids de résine.

5. Composition réticulable selon l'une quelconque des revendications 1 à 4, **caractérisée en ce que** le composé synthétique est un élastomère polyuréthane de type polyester.

6. Composition réticulable selon l'une quelconque des revendications 1 à 5, **caractérisée en ce qu'**elle comporte entre 0,8 et 2,1 parties en poids de peroxyde pour 100 parties en poids de résine.

7. Composition réticulable selon l'une quelconque des revendications 1 à 6, **caractérisée en ce que** le peroxyde présente une température de décomposition comprise entre 110 et 145°C, et de préférence entre 135 et 145°C.

8. Composition réticulable selon l'une quelconque des revendications 1 à 7, **caractérisée en ce qu'**elle comporte entre 1 et 4 parties en poids d'aminosilane pour 100 parties en poids de résine.

9. Composition réticulable selon l'une quelconque des revendications 1 à 8, **caractérisée en ce qu'**elle comporte en outre au moins un polymère secondaire compatible avec le copolymère d'éthylène et d'acétate de vinyle.

10. Composition réticulable selon la revendication 9, **caractérisée en ce que** le polymère secondaire est choisi parmi le groupe des polyéthylènes hautes densités et des polyéthylènes greffés anhydride maléique.

11. Composition réticulable selon l'une des revendications 9 ou 10, **caractérisée en ce qu'**elle comporte moins de 40 parties en poids de polymère secondaire pour 100 parties en poids de résine.

12. Composition réticulable selon l'une quelconque des revendications 1 à 11, **caractérisée en ce qu'**elle comporte en outre au moins une charge choisie parmi le groupe des charges ignifugeantes, des charges de remplissage, et des charges de renforcement.

13. Composition réticulable selon l'une quelconque des revendications 1 à 12, **caractérisée en ce qu'**elle comporte moins de 190 parties en poids de charge pour 100 parties en poids de résine.

14. Composition réticulable selon l'une quelconque des revendications 1 à 13, **caractérisée en ce qu'**elle comporte en outre au moins un additif choisi parmi le groupe des stabilisants, des antioxydants, des agents de coloration, des agents de mise en oeuvre, et des anti-ultraviolets.

15. Câble d'énergie et/ou de télécommunication, **caractérisé en ce qu'**il comporte au moins une gaine obtenue à partir d'une composition réticulable selon l'une quelconque des revendications précédentes.

16. Câble d'énergie et/ou de télécommunication, comportant plusieurs conducteurs isolés s'étendant à l'intérieur d'une même gaine de protection externe, **caractérisé en ce que** la gaine de protection externe est obtenue à partir d'une composition réticulable selon l'une quelconque des revendications 1 à 14.
